**Europäisches Patentamt**

**European Patent Office**

**Office européen des brevets**

(19)

(11) Numéro de publication: **0 081 429**
**B1**

(12) # FASCICULE DE BREVET EUROPEEN

(45) Date de publication du fascicule du brevet:
**23.10.85**

(51) Int. Cl.⁴: **G 21 C 3/32**

(21) Numéro de dépôt: **82402205.7**

(22) Date de dépôt: **03.12.82**

(54) **Dispositif d'arrêt complémentaire pour un réacteur nucléaire sous-modéré refroidi à l'eau.**

(30) Priorité: **04.12.81 FR 8122752**

(43) Date de publication de la demande:
**15.06.83 Bulletin 83/24**

(45) Mention de la délivrance du brevet:
**23.10.85 Bulletin 85/43**

(84) Etats contractants désignés:
**BE DE FR GB IT**

(56) Documents cités:
**BE - A - 640 701**
**BE - A - 684 620**
**CA - A - 1 015 471**
**FR - A - 1 560 777**
**FR - A - 2 477 753**

(73) Titulaire: **FRAMATOME ET CIE., Tour Fiat 1, Place de la Coupole, F-92400 Courbevoie (FR)**

(72) Inventeur: **Millot, Jean-Paul, 1 allée des Roitelets, F-78310 Elancourt (FR)**
Inventeur: **Alibran, Patrice, 62 rue Amelot, F-75011 Paris (FR)**
Inventeur: **Hittner, Dominique, 77 boulevard Lannes, F-75116 Paris (FR)**

(74) Mandataire: **Fort, Jacques, CABINET PLASSERAUD 84, rue d'Amsterdam, F-75009 Paris (FR)**

## Description

L'invention concerne un réacteur nucléaire sous-modéré et refroidi à l'eau.

Un tel réacteur comporte un coeur constitué par des assemblages combustibles disposés côte et de deux types différents, les uns appelés assemblages fissiles, renfermant principalement un matériau fissile alors que les autres, appelés assemblages fertiles renferment un matériau susceptible de produire de la matière fissile sous l'effet du bombardement neutronique. Les assemblages fertiles sont généralement disposés à la périphérie du coeur où ils recueillent le rayonnement neutronique produit par les assemblages fissiles.

Le coeur du réacteur baigne dans un fluide modérateur tel que de l'eau qui, généralement, sert également de fluide caloporteur. Ce fluide circule en contact avec les éléments combustibles disposés à l'intérieur des assemblages.

Par rapport aux réacteurs à eau sous pression de type classique qui ne comportent que des assemblages fissiles, les réacteurs sous-modérés présentent un rapport volume de modérateur sur volume du matériau fissile dans le coeur, ou rapport de modération VM/VU, très inférieur si bien que le spectre d'énergie des neutrons est très différent.

Ce spectre est intermédiaire entre celui des réacteurs à eau sous pression classiques où les neutrons sont très lents et celui des réacteurs rapides où les neutrons ne sont pas ralentis. Ce spectre est dit épithermique. Un tel spectre permet de produire de la matière fissile à partir de matière fertile disposée par exemple, à périphérie du coeur.

Dans les réacteurs sous-modérés, on obtient un rapport de modération faible, en prévoyant un répartition du matériau combustible dans les assemblage fissiles assurant à la fois un contact optimum avec le modérateur et un faible rapport volumique entre le modérateur et le matériau fissile.

Les assemblages combustibles, qu'ils soient fissiles ou fertiles, sont constitués par un boîtier de forme prismatique en un matériau absorbant faiblement les neutrons tel qu'un alliage de zirconium, à l'intérieur duquel des crayons tubulaires de grande longueur renfermant le matériau fissile ou le matériau fertile sont disposés parallèlement à la hauteur du boîtier et suivant un réseau régulier dans les sections droites de ce boîtier.

L'écartement entre les crayons, à l'intérieur de l'assemblage, est généralement maintenu par des dispositifs d'espacement tels que des fils enroulés en spirales autour de la gaine des crayons. Cette disposition permet la circulation du fluide caloporteur et modérateur en contact avec toute la surface du crayon, tout en autorisant un très faible espacement entre les crayons, c'est-à-dire l'obtention d'un réseau très dense dans lequel les gaines des crayons ne sont cependant jamais jointives. Un tel réseau à grande densité des crayons en matériau fissile permet d'obtenir un facteur de modération faible.

A l'intérieur des assemblages, certaines positions dans le faisceau sont réservées à des tubes-guides traversant l'assemblage sur presque toute sa hauteur et permettant l'introduction à l'intérieur de celuici des crayons de matériau absorbant fortement les neutrons réunis sous forme de grappe constituant les barres de commande du réacteur.

Le déplacement contrôlé de ces barres de commande de façon à introduire plus ou moins profondément les crayons de matériau absorbant dans les tubes-guides de certains assemblages permet de régler la réactivité du coeur du réacteur.

En cas d'arrêt d'urgence du réacteur, on laisse retomber toutes les barres de commande en position d'insertion maximum dans le coeur du réacteur, ce qui introduit une anti-réactivité maximum de l'ordre de 7000 pcm.

Dans les réacteurs à eau sous pression classiques qui ne sont pas utilisès pour opérer la conversion de matériau fertile en matériau fissile, un second système permet d'assurer la sous-criticité du coeur, en cas d'incedent. Il s'agit du système de borication d'urgence. En effet, dans ces réacteurs, la conduite du réacteur est assurée simultanément par les barres de commande et par l'introduction de bore sous forme d'acide borique dans l'eau de réfrigération du réacteur.

Dans les réacteurs sous-modérés où l'on recherche un faible rapport de modération, aucun système de borication de l'eau de réfrigération n'est réellement efficace.

En cas de défaillance d'une partie des barres de commande, on ne possède donc pas de moyens pour assurer malgré tout la sous-criticité du coeur, dans tous les cas.

Dans le cas des réacteurs nucléaires à neutrons rapides, on connaît un dispositif d'arrêt complémentaire du réacteur constitué par des éléments absorbants articulés qui peuvent être introduits dans certains assemblages, en cas de mauvais fonctionnement du système de commande principal du réacteur.

Un tel dispositif n'est cependant pas utilisable dans le cas des réacteurs sous-modérés dont la structure est pratiquement semblable à la structure des réacteurs à eau sous pression classiques.

Le but de l'invention est donc de proposer un réacteur nucléaire sous-modéré et refroidi à l'eau comportant un coeur baignant dans le fluide modérateur (eau), constitué par des assemblages combustibles disposés côte à côte, les uns renfermant principalement un matériau fissile et les autres un matériau fertile susceptible de produire de la matière fissile, sous l'effet du bombardement neutronique, le matériau fissile ou fertile étant contenu à l'intérieur de tubes de grande longueur constituant les crayons combustibles rassemblés sous forme d'un faisceau de crayons parallèles à l'intérieur du boîtier de l'assemblage et un ensemble de barres de commande constituées par des crayons de matériau absorbant fortement les neutrons dont l'introduction à l'intérieur de tubes-guides se substituant chacun à plusieurs crayons combustibles dans les assemblages permet d'abaisser la réactivité du réacteur, ce réacteur nucléaire étant tel qu'on puisse introduire dans le coeur, en cas de défaillance de certaines barres de commande, des éléments absorbants créant une anti-réactivité suffisante pour pallier toute défaillance des barres de commande, quel que soit l'état du coeur du réacteur au moment où apparaît cette défaillance.

Dans ce but, le réacteur comporte à l'intérieur de certains assemblages du coeur un dispositif d'arrêt complémentaire comprenant des tubes-guides dont la section est au moins égale à la somme des sections de trois crayons combustibles et se substituant à au moins trois crayons, entourés par au moins une rangée de crayons fertiles et un ensemble de barres d'arrêt de section adaptée à la section des tubes-guides, constituées principalement par un matériau absorbant fortement les neutrons pour l'arrêt du réacteur par introduction des barres en position d'insertion maximum dans les tubes-guides de grande section, en cas de défaillance des barres de commande.

Afin de bien faire comprendre l'invention on va maintenant décrire à titre d'exemple non limitatif, en se référant aux figures jointes en annexe, plusieurs modes de réalisation d'un dispositif d'arrêt complémentaire, dans le cas d'un réacteur sous-modéré comportant des assemblages à section hexagonale.

La figure 1 est une vue schématique en coupe par un plan horizontal, du coeur du réacteur.

La figure 2 est une vue en coupe par un plan horizontal d'un assemblage combustible comportant des tubes-guides de grande section de forme cylindrique à section circulaire.

La figure 3 est une vue en coupe par un plan horizontal d'un assemblage combustible comportant des tubes-guides à section triangulaire.

La figure 4 est une vue en coupe par un plan horizontal d'un bassemblage combustible comportant des tubes-guides à section triangulaire de taille différente et disposés différemment des tubes-guides de l'assemblage représenté à la figure 3.

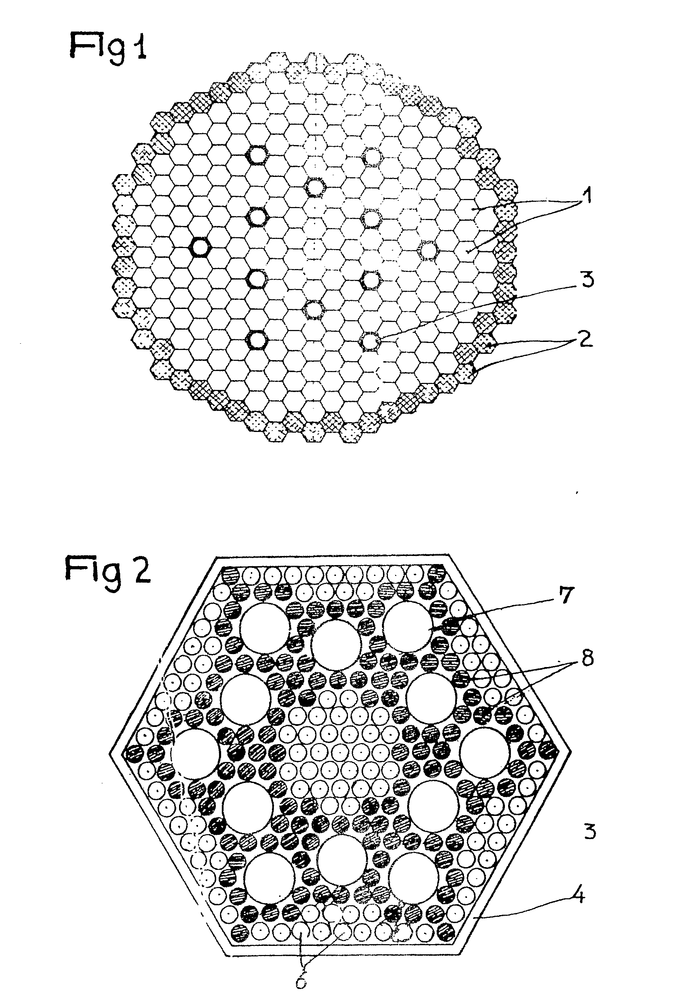

Sur la figure 1, on voit l'ensemble du coeur du réacteur constitué par des assemblages prismatiques à section hexagonale disposés côte à côte. Ces assemblage occupent toute la hauteur du coeur et sont de trois types différents.

Les assemblage 1 sont des assemblages fissiles comportant une proportion importante de crayons de matériau fissile.

Les assemblages 2 disposés à la périphérie du coeur sont des assemblages fertiles renfermant une grande proportion d'uranium faiblement enrichi, naturel ou appauvri en uranium 235, comme matériau fertile.

Enfin, les assemblages 3 sont des assemblages comportant des tubes-guides de grande section faisant partie du dispositif d'arrêt complémentaire.

Ces assemblages 3 seront décrits en se référant aux figures 2 à 4.

Sur la figure 2, on voit un premier mode de réalisation d'un assemblage 3 comportant un boîtier prismatique à section hexagonale 4 et des crayons fissiles 6 disposés à l'intérieur de ce boîtier 4 suivant un réseau régulier dans un plan de section droite de l'assemblage. Les crayons combustibles 6 ont un diamètre voisin de 9 mm et sont disposés les uns à côte des autres avec un très faible espacement ménagé grâce à un fil enroulé en hélice autour du crayon.

Douze tubes 7 de grandes dimensions se substituent aux crayons combustible dans certaines zones de l'assemblage.

Chacun des tubes 7 occupe la position de sept crayons, si bien que le diamètre des tubes-guides est voisin de 23 mm.

Chacun des tubes-guides est entouré par des crayons de matériau fertiles 8 renfermant principalement de l'uranium appauvri en uranium 235. Des crayons fertiles sont également disposés dans les angles de l'assemblage.

La présence de tubes-guides de grande section permet l'introduction d'éléments absorbants de volume important à l'intérieur des assemblages 3, ce qui permet malgré un nombre relativement réduit d'assemblages comportant des tubes-guides du dispositif d'arrêt complémentaire (douze dans le cas du coeur représenté à la figure 1), de pallier toute défaillance du système de commande principal constitué par des barres de commande introduites dans des tubes-guides se substituant à un seul crayon dans les assemblages 1.

Cependant, la présence de tubes-guides de grande section dans les assemblages 3, remplis d'eau lorsque le dispositif d'arrêt complémentaire n'est pas en fonctionnement, est responsable de l'apparition de zones où le rapport de modération est très élevé. Ceci crée des pics locaux de puissance d'une amplitude inacceptable, pour la tenue du crayon en cours de fonctionnement du réacteur, du fait de l'apparation du phénomène d'ébullition nuclée. On aplatit la distribution de puissance dans l'assemblage en introduisant autour de chacun des tubes-guides au moins une rangée de crayons fertiles 8 qui dans l'assemblage représenté à la figure 2 représentent 56% du nombre total des crayons de l'assemblage. Cette disposition a également l'avantage d'accroître la production de matériau fissile à partir de matériau fertile.

Le dispositif d'arrêt complémentaire comporte en plus des tubes-guides de grande section 7 des grappes de tubes renfermant un matériau absorbant constituant des barres de commande spéciales ou barres d'arrêt disposées au-dessus des assemblages 3 et maintenues en position haute, par un dispositiv de sécurité, par exemple magnétique, qui se déclenche en cas de défaillance du système de barres de commande principal pour laisser retomber en position d'insertion maximum, les barres d'arrêt à l'intérieur des tubes-guides 7.

L'anti-réactivité introduite par les douze grappes de matériau absorbant disposées au-dessus des assemblages 3 est de l'ordre de 2500 à 3000 pcm, lorsque les grappes sont introduites en position d'insertion maximum dans les assemblages 3 du coeur.

Cette anti-réactivité est suffisante pour pallier toute défaillance prévisible des barres de commande du système principal.

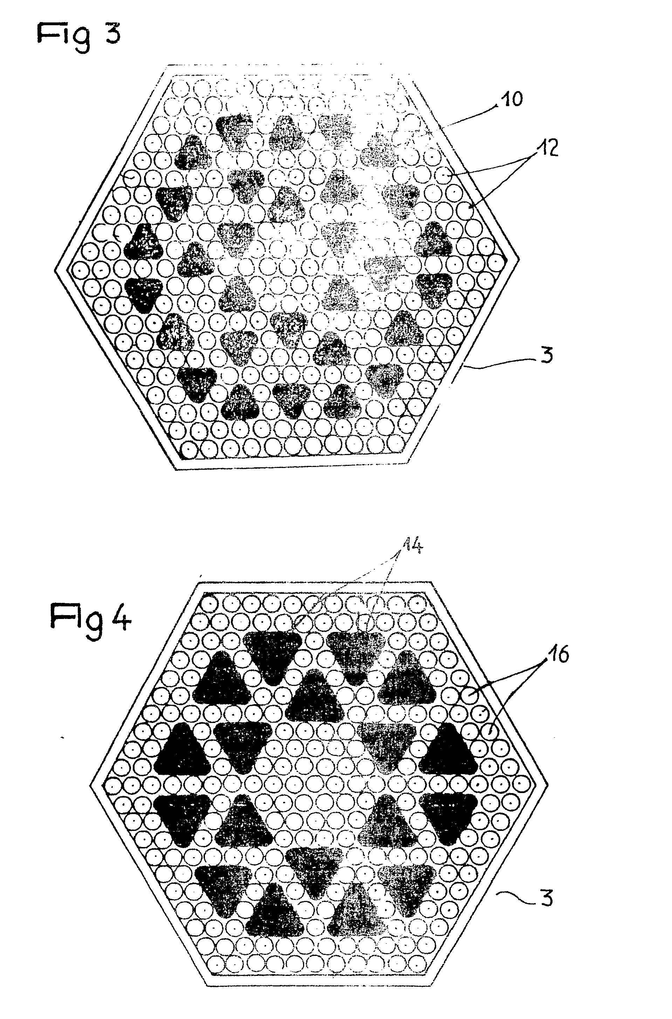

Sur la figure 3, on voit un second mode de réalisation d'un assemblage 3, où les tubes-guides 10 comportent des sections triangulaires à angles arrondis occupant la position de trois crayons 12 du réseau.

Trente tubes-guides 10 à grande section pour chacun des assemblages 3 permettant l'introduction d'un volume suffisant de matériau absorbant dans les assemblages 3, en cas de défaillance du système de commande principal.

Sur la figure 4, on voit un troisième mode de réalisation des tubes-guides du dispositif d'arrêt complémentaire suivant l'invention, ces tubes-guides 14 ayant une section triangulaire à angles arrondis occupant la place de six crayons 16 du réseau de l'assemblage. Dix-huit tubes-guides sont nécessaires pour obtenir un effet absorbant suffisant dans chacun des assemblages 3.

Les barreaux de matériau absorbant constitués par exemple par des tubes remplis de carbure de bore, ont évidemment des sections de forme correspondante aux sections des tubes-guides et une dimension légèrement inférieure permettant l'introduction de ces barreaux absorbants, reliés sous forme de grappes associées à chacun des assemblages à l'intérieur des tubes-guides de grande dimension.

On voit que les principaux avantages du dispositif suivant l'invention sont de permettre de réaliser simplement et avec une grande sûeté de réalisation l'arrêt du réacteur en cas de défaillance du système de commande principale.

En effet, l'introduction des barreaux absorbants dans les tubes-guides de grande dimension peut être réalisée uniquement par l'interruption de l'alimentation d'un dispositif magnétique de retenue de la grappe de matériau absorbant disposée au-dessus de l'assemblage comportant les tubes-guides de grande dimension.

De plus, on peut utiliser des dispositifs de retenue et de guidage de grappes tout-à-fait semblables à ceux utilisés dans les réacteurs PWR pour les barres de commande, l'ensemble du dispositif étant cependant très simplifié, puisque les grappes de matériau absorbant sont soit en position complètement relevée au-dessus des assemblages soit en position d'insertion maximum et ne servent pas à la commande du réacteur par positionnement précis à l'intérieur de l'assemblage.

D'autre part, la présence de crayons fertiles autour des tubes-guides permet d'éviter les pics locaux de puissance et d'augmenter la quantité de matériau fissile produite à partir du matériau fertile.

Un dispositif d'arrêt complémentaire de grande efficacité peut être obtenu avec un faible nombre d'assemblage équipés de tubes-guides de grandes sections et sans modification sensible du dispositif utilisé pour le déplacement des barres de commande.

C'est ainsi que le nombre et la position des assemblages comportant des tubes-guides de grande section peuvent être différents de ceux qui ont été indiqués, que la forme et la dimension des tubes-guides peuvent être variables, ces tubes-guides devant cependant occuper la position d'au moins trois crayons dans le réseau. L'invention est applicable non seulement aux réacteurs comportant des assemblages à section hexagonale mais également aux réacteurs dont les assemblages ont une toute autre forme, par exemple aux réacteurs dont les assemblages ont une section carrée.

## Revendications

1. Réacteur nucléaire sous-modéré et refroidi à l'eau comportant un coeur baignant dans le fluide modérateur (eau), constitué par des assemblages combustibles (3) disposés côte à côte, les uns renfermant principalement un matériau fissile et les autres un matériau fertile susceptible de produire de la matière fissile sous l'effet du bombardement neutronique, le matériau fissile ou fertile étant contenu à l'intérieur de tubes de grande longueur constituant des crayons (6) combustibles rassemblés sous forme d'un faisceau de crayons parallèles à l'intérieur du boîtier (4) de l'assemblage (3) et un ensemble de barres de commande constituées par des crayons de matériau absorbant fortement les neutrons dont l'introduction à l'intérieur de tubes-guides se substituant chacun à plusieurs crayons combustibles dans les assemblages permet d'abaisser la réactivité du réacteur, caractérisé en ce qu'il comporte, à l'intérieur de certains assemblages (3) du coeur, un dispositif d'arrêt complémentaire comprenant des tubes-guides (7), dont la section est au moins égale à la somme des sections de trois crayons (6) comburtibles et se substituant à au moins trois crayons, entourés par au moins une rangée de crayons fertiles (8) et un ensemble de barres d'arrêt de section adaptée à la section des tubes-guides (7) constituées principalement par un matériau absorbant fortement les neutrons, pour l'arrêt du réacteur par introduction des barres d'arrêt en position d'insertion maximum dans les tubes-guides (7), de grande section, en cas de défaillance des barres de commande.

2. Réacteur nucléaire selon la revendication 1, caractérisé par le fait que les tubes-guides (7) de grande section sont de forme cylindrique à section circulaire.

3. Réacteur nucléaire selon la revendication 2, caractérisé par le fait que les tubes-guides (7) de grande section circulaire occupent la position de sept crayons du réseau de l'assemblage.

## Patentansprüche

1. Untermoderierter wassergekühlter Kernreaktor mit einem im Moderatorfluid (Wasser) eingetauchten Reaktorkern, bestehend aus Seite an Seite angeordneten Brennelementkassetten (3), von denen einige prinzipiell spaltbares Material und andere brütbares Material, das unter Einwirkung eines Neutronenbeschusses spaltbares Material erzeugen kann, enthalten, wobei das spaltbare oder brütbare Material im Inneren sehr langer Rohre enthalten ist, die die zu einem Bündel paralleler Stäbe im Inneren des Gehäuses (4) einer Brennelementkassette (3) zusammengefaßten Brennstäbe (6) bilden, und aus einer Gruppe von aus Stäben aus stark Neutronen-absorbierendem Material gebildeten Steuerstäben, deren Einführung in das Innere von jeweils mehrere Brennstäbe in einer Brennelementkassette ersetzenden Führungsrohren ermöglicht die Reaktoraktivität zu senken, gekennzeichnet durch eine im Inneren bestimmter Brennelementkassetten (3) des Reaktorkerns angeordnete Zusatzeinrichtung, die Führungsrohre (7), deren Querschnittsfläche mindestens gleich der Summe der Querschnitte dreier Brennstäbe (6) ist und die an die Stelle von mindestens drei Stäben treten, und von mindestens einer Reihe von Stäben (8) aus brütbarem Material umgeben sind und eine Gruppe von Abschaltstäben, deren Querschnittsfläche an die Querschnittsfläche der Führungsrohre (7) angepaßt ist und prinzipiell aus einem stark Neutronen-absorbierenden Material bestehen, aufweist, zum Abstellen des Reaktors dann, wenn die Steuerstäbe versagen, durch Einführen der Abstellstäbe bis zur maximalen Einführstellung in die Führungsrohre (7) mit großer Querschnittsfläche.

2. Kernreaktor nach Anspruch 1, dadurch gekennzeichnet, daß die Führungsrohre (7) mit großer Querschnittsfläche zylindrisch sind und einen kreisförmigen Querschnitt haben.

3. Kernreaktor nach Anspruch 2, dadurch gekennzeichnet, daß die Führungsrohre (7) mit großer Querschnittsfläche den Platz von sieben Stäben der Brennelementkassettenanordnung einnehmen.

## Claims

1. Under-moderated water cooled nuclear reactor comprising a core immersed in the moderating fluid (water), consisting of fuel assemblies (3) arranged side-by-side, some of them mainly containing fissile material, while the others contain fertile material which is capable of producing fissile material under the action of neutron bombardment, the fissile or fertile material being contained within long tubes constituting fuel rods (6) grouped together as a bundle of parallel rods within the housing (4) of the assembly (3) and a set of control bars consisting of rods of strongly neutron absorbing material whose insertion into guide tubes each substitued for a plurality of fuel rods in the assemblies makes it possible to lower the reactivity of the reactor, characterized in that it comprises, within some of the assemblies (3) of the core, a complementary shut down device comprising guide tubes (7) whose cross-section is at least equal to the sum of the cross-sections of three fuel rods (6) and substituted for at least three rods, surrounded by at least one row of fertile rods (8) and a plurality of shut-down rods whose cross-section matches the cross-section of the guide tubes (7) and which mainly consist of a strongly neutron absorbing material, for shutting down the reactor by introduction of a shut-down rod into the guide tubes (7) of large sections, in the position of maximum insertion, upon failure of the control bars.

2. Nuclear reactor according to claim 1, characterized in that the guide tubes (7) of large cross-section have a cylindrical shape with a circular cross-section.

3. Nuclear reactor according to claim 1, characterized in that the guide tubes (7) of large cross-section occupy the position of seven rods in the lattice of the assembly.

Fig 1

Fig 2

Fig 3

Fig 4